# EUROPEAN PATENT APPLICATION

(11) **EP 3 308 656 A1**
(43) Date of publication of application: **18.04.2018**
(21) Application number: 16807587.7
(22) Date of filing: 10.06.2016
(51) Int. Cl.: A23L 35/00, B65D 85/50

(54) **FROZEN DUMPLING AND PRODUCTION METHOD THEREFOR, CONTAINER FOR FROZEN DUMPLING, AND PACKAGING FOR FROZEN DUMPLING**

(30) Priority: 12.06.2015 JP 2015119063
(71) Applicant: Ajinomoto Co., Inc., Tokyo 104-8315 (JP)
(72) Inventor: YAN, Siyan, Oura-gun Gunma 370-0523 (JP); KAMEYAMA, Mie, Oura-gun Gunma 370-0523 (JP)
(74) Representative: Strehl Schübel-Hopf & Partner
(86) International application number: PCT/JP2016/067313
(87) International publication number: WO 2016/199882

(57) **Abstract**

The frozen gyoza dumpling of the present invention contains frozen gyoza dumpling itself 1 and frozen batter liquid 2 attached to the gyoza dumpling itself, wherein not less than 40% weight of the total attached frozen batter liquid 2 attaches to outer peripheral edge part of the bottom surface 14 of the gyoza dumpling itself and extends downwardly and sidewardly from the outer peripheral edge. In addition, the container of the present invention preferably contains the frozen gyoza dumpling of the present invention, the inside of the container has a supporting surface to support not less than 60% of the bottom surface 14 of the gyoza dumpling itself 1, and a recess part to preferably receive the frozen batter liquid. In addition, the present invention provides a pack of frozen gyoza dumplings which uses the above-mentioned container, and a manufacture method of a frozen gyoza dumpling by using the above-mentioned container.

## Description

### [Technical Field]

The present invention relates to a frozen gyoza dumpling comprising a frozen gyoza dumpling itself and a frozen batter liquid attached thereto, a manufacture method of the frozen gyoza dumpling, a container for containing the frozen gyoza dumpling, and a frozen gyoza dumpling pack comprising the frozen gyoza dumpling contained in said container.

### [Background Art]

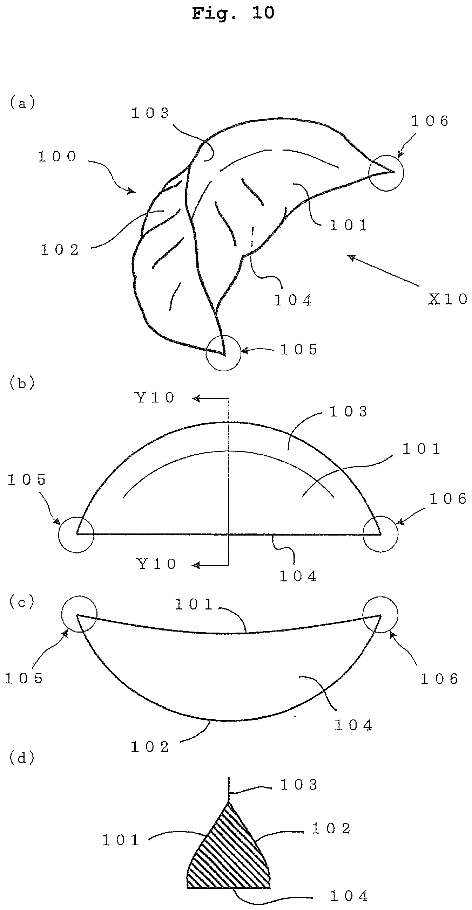

A typical shape of a gyoza dumpling is a curved three-dimensional shape having a longitudinal direction as exemplarily shown in Fig. 10(a). However, the shape of the gyoza dumpling exemplified in this Figure is a most general one and there are many variations including one free of a curve, a thick one and the like.

In the present specification, to simplify explanation, the shape of gyoza dumpling seen from the side (shape of the side surface when seen along the direction of arrow X10 in Fig. 10(a)) is expressed by a simple half-moon shape shown in Fig. 10(b), and the shape of the bottom surface of gyoza dumpling is expressed by a simple crescent moon shape shown in Fig. 10(c). In addition, a cross sectional shape when the main part of gyoza dumpling is cut perpendicularly to the longitudinal direction (shape appearing as cross-sectional view on arrow Y10-Y10 in Fig. 10(b)) is expressed as a simple shape of triangular top part with swollen side surfaces shown in Fig. 10(d), which is added with a line segment showing a marginal part 103.

A gyoza dumpling 100 having a typical shape exemplified in Fig. 10(a)-(d) has two side surfaces (101, 102), a marginal part (where dough sheet is folded to join in an overlap) 103, a bottom surface 104, and two ends (105, 106) on the opposite sides in the longitudinal direction. Gyoza dumpling baked on a heating plate for cooking (frying pan, etc.) has a burn mark on the bottom surface 104. The bottom surface is also called a "baking surface" since it is a surface to be imparted with a burn mark. These names such as "bottom surface" and "side surface" are used to explain each part of gyoza dumpling and do not limit the position or posture of the gyoza dumpling. For example, baked gyoza dumpling is generally placed on a dish with the bottom surface having a burn mark facing up.

Frozen gyoza dumpling is generally manufactured by wrapping the ingredient (filling), which is a mixture of chopped vegetables, ground meat and the like, with dough for gyoza dumpling, and subjecting same to a freezing treatment. Prior to the aforementioned freezing treatment, a preliminary heat treatment such as steaming and the like is applied as necessary. As a cooking method for eating such frozen gyoza dumplings, a basic cooking method includes placing frozen gyoza dumplings side by side on a heating plate with oil spread therein and the like, adding a given amount of water, putting a lid thereon, and applying predetermined thawing and a heat treatment in a steam-baked state as well as making a burn mark on the bottom surface of gyoza dumplings to give baked gyoza dumplings.

However, the aforementioned frozen gyoza dumplings have defects in that since water needs to be added onto a heated plate containing oil at a high temperature, oil splashing occurs and water is scattered, which may be dangerous, and further, how it is cooked up sometimes varies depending on the amount of water added, and making a clean color of baking on the bottom surface of gyoza dumplings requires a skill.

To overcome such defects, various propositions have conventional been made and, for example, a frozen gyoza dumpling is known which is obtained by contacting a gyoza dumpling with a first layer composed of a batter liquid and a second layer composed of water or a seasoning liquid, and subjecting the gyoza dumpling to a freezing treatment, thereby obviating the need for oil and water when heating cooking the gyoza dumpling in a frying pan, and the need for a lid (see, for example, patent document 1).

To further improve crispy texture/mouthfeel of the bottom surface with a burn mark of gyoza dumpling after baking, and hetero texture and juicy texture of the filling, frozen gyoza dumpling obtained by attaching a batter liquid (containing starch (or grain flour), oil and/or fat) containing 70 - 90 wt% water to at least the bottom surface of gyoza dumpling at a particular ratio per one gyoza dumpling and freezing them has also been developed (see, for example, patent document 2). In patent document 2, the bottom surface of frozen gyoza dumpling is called a "baking surface" since it is a surface to be imparted with a burn mark.

In the frozen gyoza dumpling with a frozen batter liquid as described in patent document 2, a necessary amount (for example, about 2 g - about 14 g) of a batter liquid in a frozen state is attached to cover the bottom surface ("baking surface") and further, the side surface of one gyoza dumpling (for example, about 15 g - about 45 g). The batter liquid contains water in an amount necessary for cooking (particularly, treatment to bake and simultaneously steam on a heating plate).

Since only a suitable amount of a batter liquid containing a suitable amount of water is attached in a frozen state about the bottom surface of the frozen gyoza dumpling, the following superior effects can be obtained.

Addition of water is not necessary during heating cooking (cooking by baking on a heating plate and the like before eating), and the heating cooking operation becomes easy.

Since removing and placing a lid during heating cooking is less frequent, oil splashing and water splashing caused by the addition of water to a heated and oiled plate do not occur, and a burn caused thereby can be prevented.

Since dirt produced by oil splashing and water splashing is less, cleaning can be performed with ease.

Since a predetermined amount of a batter liquid having optimized components is attached in advance to the surface to be baked, a skill is not required, and the development of unevenness in baking of each gyoza dumpling can be suppressed when plural gyoza dumplings are baked simultaneously and excessive heating of the filling during cooking can be suppressed. As a result, a crunchy texture of vegetable ingredient can be felt, shrinkage and hardening of the filling during cooking become less, roughness of the filling is felt less, and soft and smooth texture (moist feeling) can be felt.

A drip from the filling does not transfer to the dough easily, even when the time lapses after heating cooking, the amount of juice immediately after baking (juiciness) can be maintained. This also suppresses transfer of water into the dough, which in turn maintains chewiness of the dough and preferable texture of the dough.

### [Document List]

### [Patent documents]

patent document 1: JP-A-2006-296428
patent document 2: WO 2014/007387

### [SUMMARY OF THE INVENTION]

### [Problems to be Solved by the Invention]

Frozen gyoza dumpling attached with a frozen batter liquid shows the above-mentioned superior characteristics. The present inventors have studied a room for improvement to further improve the quality of the frozen gyoza dumpling and found that there is room for improvement in the following two items.

The first item relates to the shape of the inner bottom surface of a container containing gyoza dumpling (also called a "tray" due to a shallow and wide shape for arranging multiple gyoza dumplings).

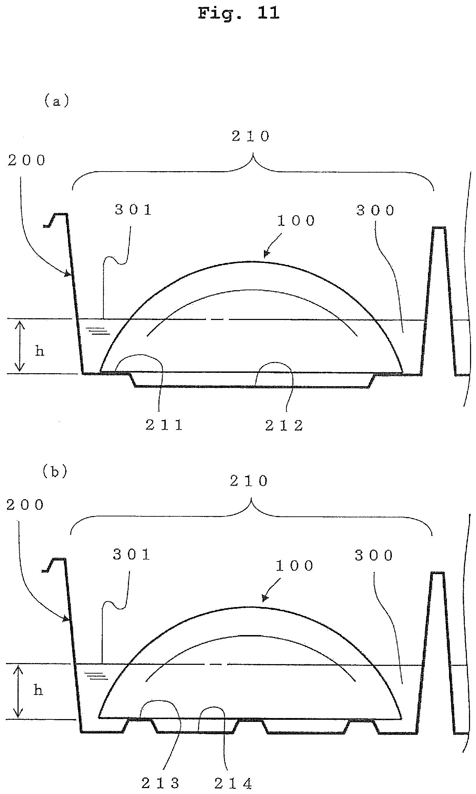

As for conventional frozen gyoza dumpling, a plurality of gyoza dumplings are arranged in a container, which is put in an outer packaging bag and sold. The inside of the container is generally divided into gyoza dumpling holding parts for holding each gyoza dumpling by partitioning protrusions and peripheral wall parts. As shown in Fig. 11(a), (b), one gyoza dumpling 100 and a necessary amount of a batter liquid 300 are fed and frozen in each gyoza dumpling holding part 210 in the container 200. A recess part for receiving the batter liquid is formed on the bottom of each gyoza dumpling holding part. In the embodiment of Fig. 11(a), one recess part 212 for receiving the batter liquid is formed in the center part of the bottom surface 211 of the gyoza dumpling holding part 210, whereby the batter liquid can attach to the bottom surface of gyoza dumpling. In the embodiment of Fig. 11(b), a plurality of recess parts 214 for receiving the batter liquid are formed on the bottom surface 213 of the gyoza dumpling holding part 210, whereby the batter liquid can attach to the bottom surface of gyoza dumpling.

In these conventional containers shown in Fig. 11(a), (b), the bottom surface (211, 213) of each gyoza dumpling holding part protrudes relative to the bottom of the recess part (212, 214) to support the gyoza dumpling. According to the detailed observation by the present inventors, it was found that, in a container including unevenness in the bottom part of such gyoza dumpling holding part, the bottom surface of gyoza dumpling enters into the recess part in the bottom of the gyoza dumpling holding part due to the own weight of the gyoza dumpling. As a result, the aforementioned unevenness of the container is sometimes transferred onto the bottom surface of gyoza dumpling, which in turn sometimes causes an unburnt residue of the batter liquid on the bottom surface of the baked gyoza dumpling or a failure to produce a uniform burn mark on the bottom surface of each gyoza dumpling.

That is, it has been found that making the bottom surface of each gyoza dumpling holding part in the container as flat as possible is more preferable for improving the quality of baking of the bottom surface of the gyoza dumpling.

The aforementioned unburnt residue of the batter liquid refers to the batter liquid in a viscous paste state and adhering to the gyoza dumpling itself, due to the moisture remaining after insufficient heating of the batter liquid. An unburnt residue of the batter liquid unpreferably affects the texture, since it has adhesiveness and sliminess.

The second item relates to the attachment of the batter liquid to the surface of gyoza dumpling.

Conventional frozen gyoza dumpling is characterized in that a frozen batter liquid is attached to the bottom surface of gyoza dumpling. To provide a necessary amount of batter liquid 300 to one gyoza dumpling 100, the batter liquid is fed not only on the bottom surface of gyoza dumpling but also up to height h, which is about half the overall height, as shown in Fig. 11(a), (b), and the frozen batter liquid attaches thick to a wide area of about 2/3 of the outer surface of the gyoza dumpling (symbol 301 shows the liquid level of the frozen batter liquid).

According to the study made by the present inventors, it was found that the inherent texture (chewiness and the like) of the dough of the gyoza dumpling is sometimes impaired when the dough contacts the batter liquid (particularly when a preliminary heat treatment is applied before freezing to dough while it is in contact with the batter liquid and then they are directly frozen), since the dough is softened. That is, it was found that, to further improve the texture of the dough of gyoza dumpling, it is preferable to reduce the surface area of the gyoza dumpling where the batter liquid is attached thick.

Both the above two items noted by the present inventors to be improved are closely related to the shape of the container. When the bottom surface of the container is flattened to improve the above-mentioned first item, the liquid level of the batter liquid increases, and the batter liquid attaches thick up to a part higher than the side surface of the gyoza dumpling. Conversely, to reduce the thickness of the batter liquid attached to the side surface of the gyoza dumpling to improve the above-mentioned second item, the liquid level of the batter liquid needs to be lowered. When the opening size of the container is to be maintained and an appropriate total amount of the batter liquid is to be ensured, the recess part on the bottom of the gyoza dumpling holding part shown in Fig. 11 should be made deeper, and the above-mentioned first item is not improved. In addition, the batter liquid attaches thicker to the bottom surface of the gyoza dumpling.

As mentioned above, it was found that the above two items noted by the present inventors are difficult to improve at the same time.

An object of the present invention is to improve the above-mentioned first item, and reduce the unevenness of the bottom surface of the gyoza dumpling due to the effect of the container.

A further object of the present invention is to improve the above-mentioned second item, preferably simultaneously improve the above-mentioned first item as well, and improve texture of gyoza dumpling by further reducing the part where the frozen batter liquid is attached thick to the surface of the frozen gyoza dumpling.

A further object of the present invention is to provide a container for achieving the aforementioned object and a manufacture method of the aforementioned frozen gyoza dumpling, and further provide a pack of the aforementioned gyoza dumplings placed in the aforementioned container.

### [Means of Solving the Problems]

The present inventors have conducted intensive studies in an attempt to solve the above-mentioned problems and found that the above-mentioned items 1 and 2 can be respectively, preferably simultaneously, improved by attaching the main part of the frozen batter liquid in an amount necessary for one gyoza dumpling to a region including the outer peripheral edge of the bottom surface of gyoza dumpling and the vicinity thereof, wherein the main part of the frozen batter liquid extends downwardly and sidewardly from the aforementioned attached region, and by providing a container capable of affording such state of the main part of the frozen batter liquid, which resulted in the completion of the present invention.

The main constitutions of the present invention are as follows.
[1] A frozen gyoza dumpling comprising a frozen gyoza dumpling itself and a frozen batter liquid attached to the gyoza dumpling itself, wherein,
   with a bottom surface of the gyoza dumpling itself facing downward, not less than 40% of the total weight of the attached frozen batter liquid attaches to a region including a part of the outer peripheral edge of the bottom surface of the gyoza dumpling itself and the vicinity thereof, or a region including the whole outer peripheral edge of the bottom surface of the aforementioned gyoza dumpling itself and the vicinity thereof, and extends downwardly and sidewardly from the attached region.
[2] The frozen gyoza dumpling of the aforementioned [1], wherein the region including a part of the outer peripheral edge of the bottom surface and the vicinity thereof, or the region including the whole outer peripheral edge of the bottom surface and the vicinity thereof is a region of less than 20% of an area of the bottom surface as regards the bottom surface of the gyoza dumpling itself and a region at a height of not more than 5 mm from the bottom as regards the side surface of the gyoza dumpling itself.
[3] The frozen gyoza dumpling of the aforementioned [1] or [2], wherein said not less than 40% of the frozen batter liquid is located separately on both end sides of the gyoza dumpling itself.
[4] The frozen gyoza dumpling of any of the aforementioned [1] - [3], wherein a main region occupies not less than 60% of the area of the bottom surface of the gyoza dumpling itself, and the attached frozen batter liquid has a thickness of not more than 2 mm in the main region.
[5] The frozen gyoza dumpling of any of the aforementioned [1] - [4], wherein the frozen batter liquid comprises 70 - 90 wt% of water, and an amount of the frozen batter liquid attached to one gyoza dumpling itself is 18 - 60 parts by weight per 100 parts by weight of the gyoza dumpling itself.
[6] A container for containing one or more frozen gyoza dumplings, each comprising gyoza dumpling itself and a batter liquid attached thereto which are frozen,
   the container having, in its inside,
      a supporting surface to support a region of not less than 60% of the bottom surface of the gyoza dumpling itself with a bottom surface facing downward and a recess part to receive the frozen batter liquid, wherein
   the recess part has an opening part adjacent to a part of or the whole outer peripheral edge of the supporting surface,
   an internal space of the recess part is at a height not more than a height of the supporting surface, and the internal space is capable of receiving not less than 35% of the total weight of the frozen batter liquid attached to the gyoza dumpling itself in the frozen gyoza dumpling.
[7] The container of the above-mentioned [6], wherein the supporting surface is a flat surface having an area of 60% - 150% of the area of the bottom surface of the gyoza dumpling itself to be set.
[8] The container of the above-mentioned [6] or [7], wherein the bottom surface of the gyoza dumpling itself to be set has a shape having a longitudinal direction, and the supporting surface has a shape having a longitudinal direction corresponding to the shape of the bottom surface of the gyoza dumpling itself.
[9] The container of any of the above-mentioned [6] - [8], wherein the opening part of the recess part is adjacent to two parts in the outer peripheral edge of the supporting surface, and correspond to both ends of the gyoza dumpling itself supported on the supporting surface.
[10] The container of any of the above-mentioned [6] - [9], having a plurality of supporting surfaces for respectively setting a plurality of gyoza dumplings themselves, wherein the supporting surfaces are connected to each other with partitioning protrusions interposed between respective supporting surfaces and arrayed in one or more rows, and
   the aforementioned recess part adjacent to one supporting surface is divided into two by the connecting part between respective supporting surfaces.
[11] The container of the above-mentioned [10], wherein the recess part divided into two and adjacent to one supporting surface, and the recess part divided into two and adjacent to a neighboring supporting surface communicate with each other to form one recess part.
[12] The container of any of the above-mentioned [6] - [9], wherein
   a plurality of receiving parts for respectively setting a plurality of frozen gyoza dumplings are formed by dividing with partitioning protrusions, and the supporting surface and the recess part are formed inside each receiving part.
[13] A pack of frozen gyoza dumpling, having a configuration in which frozen gyoza dumpling comprising gyoza dumpling itself and a batter liquid attached to the gyoza dumpling itself, which are frozen, are set in the container of any of the above-mentioned [6] - [12], wherein
   the gyoza dumpling itself, which is frozen, is placed with a bottom surface facing downward on a supporting surface in the container, and the frozen batter liquid attached to the gyoza dumpling itself extends in a recess part to fill the recess part.
[14] The pack of the above-mentioned [13], wherein
   not less than 40% of the total weight of the frozen batter liquid attached to the gyoza dumpling itself attaches to a region including a part of the outer peripheral edge of the bottom surface of the gyoza dumpling itself and the vicinity thereof, or a region including the whole outer peripheral edge and the vicinity thereof, and extends downwardly and sidewardly from the attached region, and some or all of the not less than 40% of the total weight of the frozen batter liquid fills the recess part of the container.
[15] A manufacture method of a frozen gyoza dumpling comprising a frozen gyoza dumpling itself and a frozen batter liquid attached thereto, the method comprising
   using the container of any of the above-mentioned [6] - [12],
   a step of filling a recess in the container with a batter liquid by injection, and further injecting the batter liquid into the container to a level higher than a supporting surface in the container as long as the conditions of following (I) is satisfied,
   a step of setting an unfrozen gyoza dumpling itself with a bottom surface facing downward on the supporting surface in the aforementioned container, and
   a step of freezing the batter liquid injected into the container and the unfrozen gyoza dumpling itself set on the supporting surface, which are in contact with each other:
      (I) not less than 40% of the total weight of the batter liquid to be attached contacts a region including a part of the outer peripheral edge of the bottom surface of the unfrozen gyoza dumpling itself and the vicinity thereof, or a region including the whole outer peripheral edge and the vicinity thereof, and extends downwardly and sidewardly from the contacted region.

### [Effect of the Invention]

In the present specification, a frozen gyoza dumpling refers to a gyoza dumpling which is frozen and attached with a frozen batter liquid. For explanation, gyoza dumpling is hereinafter referred to as "gyoza dumpling itself". In addition, gyoza dumpling itself which is frozen is simply abbreviated as "gyoza dumpling itself", other state is described with an explanation, for example, "unfrozen gyoza dumpling itself", "gyoza dumpling itself after baking" and the like. In addition, a batter liquid without freezing is also referred to simply as "batter liquid".

The frozen gyoza dumpling of the present invention is the same as conventional frozen gyoza dumplings in that a frozen batter liquid is attached to the outer surface of one gyoza dumpling itself in an amount necessary for cooking. By employing conventionally known components as the components of the batter liquid, the superior effect of conventional frozen gyoza dumplings can be enjoyed.

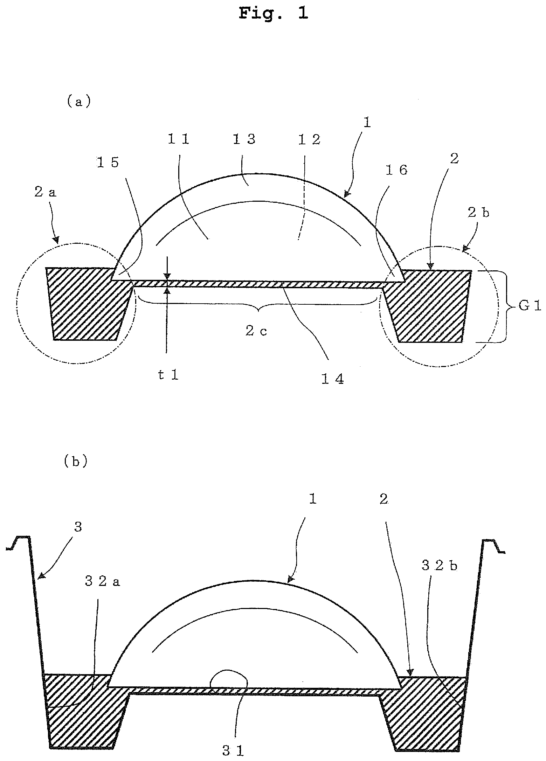

However, the frozen gyoza dumpling of the present invention is completely different from conventional frozen gyoza dumplings in the position of the frozen batter liquid present as a lump (distributing position of frozen batter liquid relative to gyoza dumpling itself). In conventional frozen gyoza dumplings, as shown in Fig. 11(a), (b), the frozen batter liquid attaches thick to the bottom surface of gyoza dumpling itself and to height h which is about half the total height of the gyoza dumpling itself. In contrast, in the frozen gyoza dumpling of the present invention, as exemplified in Fig. 1(a), frozen batter liquid parts 2a, 2b corresponding to not less than 40% of the total weight of the frozen batter liquid 2 attached to one gyoza dumpling itself 1 are disposed such that they attach to the outer peripheral edge (a part or whole) of the bottom surface of the gyoza dumpling itself and a region in the vicinity thereof, and extend downwardly and sidewardly from the aforementioned attached region.

In the following, a frozen batter liquid part which amounts to not less than 40% of the total weight of the frozen batter liquid attached to one gyoza dumpling itself is also referred to as the main part of the frozen batter liquid.

When the main part of the frozen batter liquid extends downwardly and sidewardly from the outer peripheral edge (a part or whole) of the bottom surface of the gyoza dumpling itself and a region of the vicinity thereof, as in the example of Fig. 1(a), at least the above-mentioned first item is improved. That is, since the outer surface (particularly, side surface) of the gyoza dumpling itself where a frozen batter liquid attaches thick decreases, softening of dough caused by thick attachment of the frozen batter liquid is suppressed, and the texture of dough (particularly, chewiness of dough on the side surface, further, inherent flavor of dough, roasted aroma, crispy feel when a burn mark is made on the bottom surface and the like) are improved further.

In addition, according to the present invention, the above-mentioned second item is also improved. That is, in the region occupying the most part of the bottom surface of the gyoza dumpling itself, a thin film of a frozen batter liquid may be attached over the whole bottom surface of the gyoza dumpling itself or a frozen batter liquid may not be attached at all in the present invention, which is basically different from the conventional constitution. Therefore, in the present invention, the whole bottom surface of the gyoza dumpling itself can be supported by a flat supporting surface of the container.

With the unique arranging configuration in which the bottom surface of the gyoza dumpling itself (preferably, whole bottom surface) is supported by a flat supporting surface of the container, and the main part of the frozen batter liquid is placed in surroundings adjacent to the supporting surface and below the supporting surface, the unevenness of the container is not transferred onto the bottom surface of gyoza dumpling, and gyoza dumpling itself having a flatter bottom surface is offered to consumers. Thus, gyoza dumpling itself baked on a heating plate has a more uniform burn mark on the bottom surface. In addition, since the bottom surface of the gyoza dumpling itself is flat, an unburnt residue of the batter liquid is not produced on the bottom surface of the baked gyoza dumpling itself.

Furthermore, the aforementioned arrangement configuration of the main part of the frozen batter liquid has made it possible to fill a larger amount of a batter liquid in a container having the same opening size, without increasing the batter liquid level. As a result, each gyoza dumpling after cooking can have larger burrs (also called wings, thin dough part burnt with roasted aroma spreading sidewardly from the bottom surface of the gyoza dumpling itself (baked surface)), with expectation of an improved appearance.

The container of the present invention has an inner shape most preferable and suitable for keeping the frozen gyoza dumplings in the present invention. As exemplified in Fig. 1(b), a container 3 has a constitution permitting fitting and extracting the frozen gyoza dumpling 1 of the present invention shown in Fig. 1(a), a supporting surface 31 for supporting gyoza dumpling itself on the bottom surface, and a recess part (separated into 32a and 32b in the Figure) for receiving the most or all of the main part of the frozen batter liquid attached to the gyoza dumpling itself. With this container, the frozen gyoza dumpling of the present invention can be preferably offered to consumers.

The manufacture method of the present invention defines, as one of the methods for preferably manufacturing frozen gyoza dumpling by the present invention, a method utilizing the container of the present invention as a molding die. The frozen gyoza dumpling of the present invention fitted tightly inside the container can be obtained by a step of filling a batter liquid in the recess part in the container, and further adding a batter liquid in an amount necessary for connection with the gyoza dumpling itself, a step of placing the gyoza dumpling itself on a supporting surface, and a step of freezing the batter liquid and the gyoza dumpling itself together with the container.

The frozen gyoza dumpling manufactured in the container constitutes the pack the present invention as it is, preferably sealed in an outer packaging bag (or preferably the opening of the container is further hermetically sealed with a film), and offered to consumers.

### [Brief Description of the Drawings]

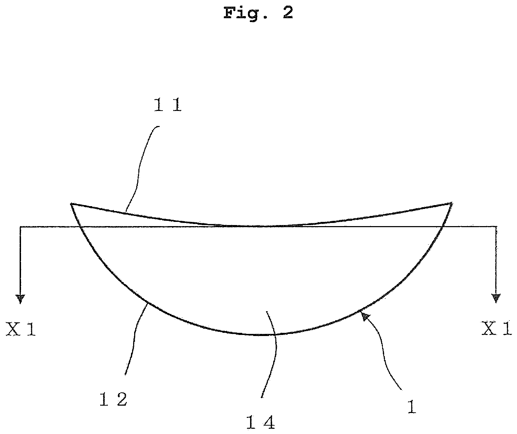

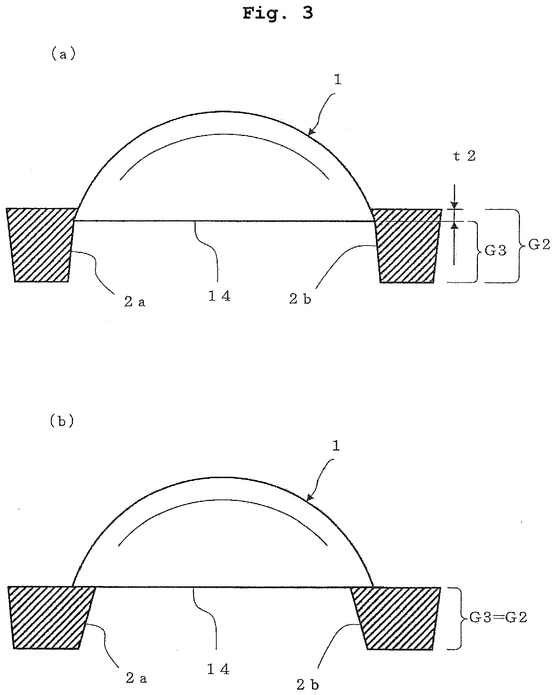

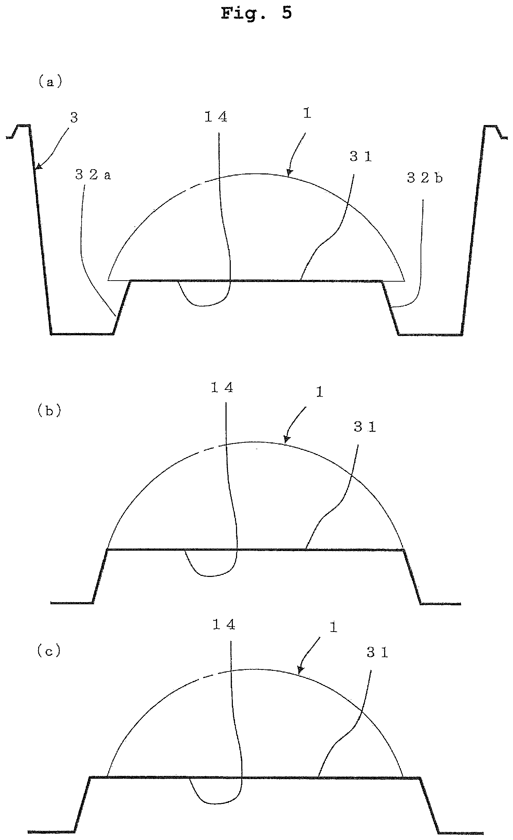

Fig. 1 is a schematic view illustrating the frozen gyoza dumpling, the container, the pack, and the manufacture method of the present invention. The gyoza dumpling itself is shown by an outside appearance of the side surface, and the frozen batter liquid and the container are shown by respective cross sections thereof. To simply explanation, the cross sections of the frozen batter liquid and the container in Fig. 1 are the cross sections along the vertical plane adjacent to one of the side surfaces (concave side surface) 11 of the gyoza dumpling itself, like the cross sectional line X1-X1 in Fig. 2. The same applies to Fig. 3, Fig. 5.
Fig. 2 shows the bottom surface of the gyoza dumpling itself, as well as the cutting positions of the cross-sectional views of Fig. 1, Fig. 3, Fig. 5.
Fig. 3 is a cross-sectional view schematically showing an example of the distribution of the main part of the frozen batter liquid relative to the gyoza dumpling itself in the present invention.
Fig. 4 is a schematic view exemplarily showing a region of the vicinity of a part of the outer peripheral edge of the bottom surface, as well as the shape of a region of the vicinity of the whole outer peripheral edge, and the shape of the main region, in the bottom surface of the gyoza dumpling itself in the present invention.
Fig. 5 schematically shows an example of the constitution of the container of the present invention.
Fig. 6 shows one example of the container of the present invention, and shows the top surface of the container (i.e., showing the inside of the opening). In this Figure, even when two planes are connected with a smooth curved surface, the part at which the planes intersect is drawn with a line to clarify the shape.
Fig. 7 shows the constitution of Fig. 6 simplified for explanation, in which inclination of all inside side walls is vertical, and the shape of each part is drawn as a simple shape.
Fig. 8 is a sectional view of the container of Fig. 6 along arrows A-A.
Fig. 9 shows a right side surface view (Fig. 9(a)) and a sectional view along arrows B-B (Fig. 9(b)) of the container of Fig. 6.
Fig. 10 exemplarily shows a typical shape of gyoza dumpling, in which the shape of each part is simplified to explain the name of each part of the gyoza dumpling. Fig. 10(a) is a perspective view of gyoza dumpling having a typical shape. In Fig. 10(b), the shape of the side surface of the gyoza dumpling shown in Fig. 10(a) is seen along the direction of arrow X10 therein and schematically expressed as a simple half moon shape. In Fig. 10(c), the shape of the bottom surface of the gyoza dumpling shown in Fig. 10(b) is schematically expressed as a simple crescent shape. Fig. 10(d) shows a sectional view on arrows Y10-Y10 of the gyoza dumpling shown in Fig. 10(b). In Fig. 10(d), the filling is not shown and the section is hatched.
Fig. 11 is a cross-sectional view schematically showing the state in which a conventional frozen gyoza dumpling is fitted in a container. In this Figure, an outer appearance of the side surface of the gyoza dumpling itself is shown, and a cross-section of the container is shown. A batter liquid surrounds the gyoza dumpling itself, and a straight line showing the liquid surface is directly drawn on the gyoza dumpling itself for easy showing of the liquid surface 301.

### [Description of Embodiments]

The constitution of the frozen gyoza dumpling of the present invention is first explained in detail by referring to Figures.

The frozen gyoza dumpling in the present invention comprises, as schematically shown in the constitution of one example of Fig. 1(a), a frozen gyoza dumpling itself 1, and a frozen batter liquid 2 attached to the gyoza dumpling itself 1. The shape of the gyoza dumpling itself 1 may be the same as that of a conventional gyoza dumpling 100 shown in Fig. 10(a), and may include many variations such as one without a curve, a thick one and the like. In the following explanation, in the present invention, the gyoza dumpling itself has two side surfaces, a marginal part, a bottom surface and two end parts like each part shown in the typical gyoza dumpling Fig. 10(a) - (d), and the shape of the gyoza dumpling itself when seen from the side, the shape of the bottom surface, and the sectional shape are expressed by simple shapes similar to those of Fig. 10(b) - (d), respectively. For explanation of the present invention, a new symbol is given to each part of the gyoza dumpling (i.e., two side surfaces (11, 12), marginal part (13), bottom surface (14), two end parts (15, 16)) as in Fig. 1.

To explain the attached position of the main part of the frozen batter liquid relative to the gyoza dumpling itself, as shown in Fig. 1, the gyoza dumpling itself 1 is shown by the outer appearance of the side surface, and the frozen batter liquid 2 and container 3 are shown by the cross section.

Also, the region to which the main part of the frozen batter liquid is attached, namely, (partial or whole) outer peripheral edge of the bottom surface of the gyoza dumpling itself and a region of the vicinity thereof are also called an outer peripheral edge region. The outer peripheral edge region refers to a region of only a side surface adjacent to (partial or whole) outer peripheral edge, a region of only a bottom surface adjacent to the outer peripheral edge, or a region bridging the side surface and the bottom surface including (partial or whole) outer peripheral edge.

In the bottom surface of the gyoza dumpling itself, a region of the rest excluding the outer peripheral edge region is also referred to as a main region.

The frozen gyoza dumpling of the present invention is characterized in that, as shown in one example of Fig. 1(a), when the bottom surface 14 of the gyoza dumpling itself 1 faces downward, not less than 40% of the frozen batter liquid (2a, 2b), which is the main part of the total weight of the attached frozen batter liquid 2, attaches to the outer peripheral edge region of the bottom surface 14 of the gyoza dumpling itself 1 and expands and extends downwardly and sidewardly from the outer peripheral edge.

The shape of the main part of the frozen batter liquid shown in Fig. 1(a) is merely one example, and does not limit the present invention. In the Figure, the main part (2a, 2b) of the frozen batter liquid is separated into two on the left and right. They may be integrated while surrounding the outer peripheral edge of the bottom surface of the gyoza dumpling itself.

The special positional relationship between the gyoza dumpling itself 1 and the main part (2a, 2b) of the frozen batter liquid 2 as shown in Fig. 1(a) affords the above-mentioned effect and achieves the object of the present invention. In addition, preferable characteristics of the conventional frozen gyoza dumpling are not impaired.

The weight of the frozen batter liquid to be attached to one gyoza dumpling itself is an amount necessary for heat cooking, and is about 18 - 60 parts by weight per 100 parts by weight of the gyoza dumpling itself. The frozen batter liquid to be attached to gyoza dumpling itself may be separated into, as in patent document 1, a layer of the batter liquid and a layer of water or a seasoning liquid.

The lower limit of the weight of the main part of the frozen batter liquid is preferably not less than 40%, more preferably not less than 50%, particularly preferably not less than 70%, of the total weight of the frozen batter liquid attached to one gyoza dumpling itself as mentioned above.

The upper limit of the weight of the main part of the frozen batter liquid may be 100% of the total weight of the frozen batter liquid attached to one gyoza dumpling itself. An embodiment in which the main part of the frozen batter liquid is 100% of the total weight of the frozen batter liquid to be attached is an embodiment in which the frozen batter liquid is completely absent in the main region of the bottom surface of the gyoza dumpling itself, and in the part higher than the defined side surface, and is one example of a preferable embodiment.

However, in the actual manufacture of a frozen gyoza dumpling by using the container of the present invention, a frozen batter liquid sometimes attaches thin to the main region of the bottom surface of the gyoza dumpling itself. Therefore, the upper limit of the weight of the main part of the frozen batter liquid suitable for the actual manufacture using the container is preferably less than 100%, more preferably not more than 95% in consideration of the inherent unevenness of the bottom surface of unfrozen gyoza dumpling itself, more preferably not more than 90%, further preferably not more than 80%, from the aspect of sufficient attachment of the frozen batter liquid to the gyoza dumpling itself.

The weight of the main part of the frozen batter liquid can be determined by freely combining the above-mentioned range of the upper limit and the range of the lower limit, such as (not less than 40%, not more than 100%), (not less than 40%, not more than 95%), (not less than 50%, not more than 100%), (not less than 50%, not more than 95%), (not less than 70%, not more than 90%), (not less than 70%, not more than 80%) and the like.

The outer peripheral edge of the bottom surface of the gyoza dumpling itself is an outline defining the shape (outer circumference shape) of the bottom surface. The bottom surface of the gyoza dumpling itself is a surface in contact with the flat surface when the gyoza dumpling itself is set on the flat surface with the bottom surface facing down. In the actual gyoza dumpling itself, the bottom surface and both side surfaces are smoothly connected with a roundly curved surface, and often lack a clear outline.

While the shape of the bottom surface of the gyoza dumpling itself is often like a crescent as shown in Fig. 10(c), it is not always necessary to be curved, and may be half-moon, streamline-shaped, or have various creative shapes.

The main part of the frozen batter liquid attaches to the outer peripheral edge region of the gyoza dumpling itself 1, and extends downwardly and sidewardly therefrom. In a general sales form of frozen gyoza dumplings, a plurality of gyoza dumplings themselves are often closely arranged in a container. In such case, since neighboring gyoza dumplings themselves contact with each other, and gyoza dumpling itself contacts a partitioning protrusion formed between neighboring gyoza dumplings themselves, the main part of the frozen batter liquid may attach to a part of the outer peripheral edge of the bottom surface 14 of the gyoza dumpling itself 1 and a region of the vicinity thereof, particularly, regions separated on the both end parts 15, 16 of the gyoza dumpling itself 1 as in Fig. 1(a).

The main part of the frozen batter liquid may be attached to a biased segment of the outer peripheral edge of the bottom surface of the gyoza dumpling itself such as one end part of the gyoza dumpling itself and the like, and the vicinity thereof. In other words, the main part of the frozen batter liquid may be biasedly attached to one side of the gyoza dumpling itself.

In an embodiment in which the main part of the frozen batter liquid extends downwardly and sidewardly from symmetrical outer peripheral edge regions such as, in the bottom surface of the gyoza dumpling itself, an embodiment in which the outer peripheral edge region extends over the whole periphery, an embodiment in which the outer peripheral edge region is separated into both end parts of the gyoza dumpling itself and the like, the main part of the frozen batter liquid becomes the base that supports the gyoza dumpling itself in a well-balanced manner when the frozen gyoza dumpling is placed on a heating plate. Therefore, even when the frozen batter liquid is melted by heating during heat cooking, the gyoza dumpling itself does not turn over to lie on its side but the bottom surface thereof preferably descends on and contacts the heating plate.

The main part of the frozen batter liquid may further have a part that expands and extends upwardly from the outer peripheral edge region. In other words, the upper surface of the main parts 2a, 2b of the frozen batter liquid shown in Fig. 1(a) may further have a part expanding upwardly to avoid contact with the side surface of the gyoza dumpling itself.

The "part of the outer peripheral edge of the bottom surface of the gyoza dumpling itself and a region of the vicinity thereof", "the whole outer peripheral edge of the bottom surface of the gyoza dumpling itself and a region of the vicinity thereof" refer to regions adjacent to some or all of the outer peripheral edge of the bottom surface, and are
(a) a region of less than 20% of an area of the bottom surface for the bottom surface of the gyoza dumpling itself, and
(b) a region at a height of not more than 5 mm from the bottom for the side surface of the gyoza dumpling itself.

As for the bottom surface of the gyoza dumpling itself in the aforementioned (a), the region (outer peripheral edge region) is more preferably less than 10%, further preferably less than 5%, of the area of the bottom surface, and may be 0% in an ideal embodiment, to make the region to which the frozen batter liquid attaches thick smaller and to make the area of the flat region on the bottom surface of the gyoza dumpling itself larger.

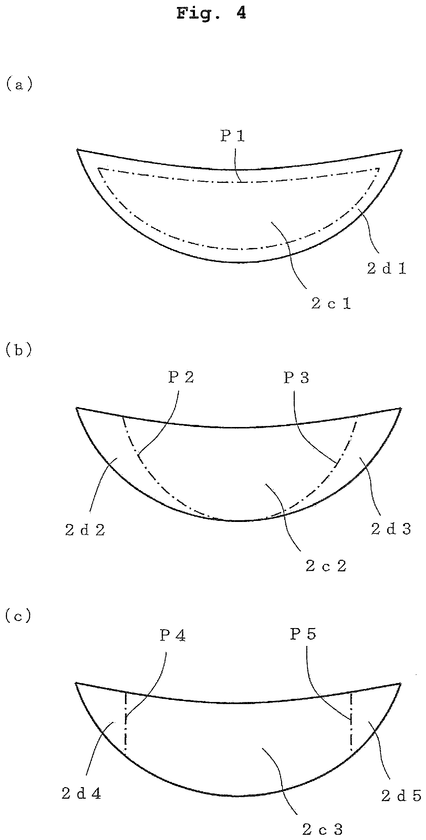

The shape of the outer peripheral edge region on the bottom surface of the gyoza dumpling itself varies, as shown in Fig. 4, depending on the position of attachment of the main part of the frozen batter liquid. Thus, it is more preferable to define by the ratio relative to the area of the bottom surface of the gyoza dumpling itself as mentioned above, rather than by the distance of entry into the inside from the outer peripheral edge of the bottom surface.

When the main part of the frozen batter liquid is not attached to the bottom surface of the gyoza dumpling itself (when the outer peripheral edge region on the bottom surface is 0% of the bottom surface area), as shown in Fig. 3(a), the main parts 2a, 2b of the frozen batter liquid are preferably attached to the side surface of the gyoza dumpling itself up to a position higher by t2 than the height of the bottom surface of the gyoza dumpling itself. This aims to bring along the main part of the frozen batter liquid when the gyoza dumpling itself is picked up. When the main part of the frozen batter liquid is not attached to the bottom surface of the gyoza dumpling itself, a part (rest) other than the main part of the frozen batter liquid may not be attached at all to the bottom surface of the gyoza dumpling itself, or attached to the bottom surface as a thin layer of not more than 2 mm. In Fig. 3(a), the frozen batter liquid attached to the bottom surface is not shown.

As for the side surface of the gyoza dumpling itself of the aforementioned (b), height t2 is preferably not more than 5 mm, more preferably not more than 3 mm, particularly preferably about 2 mm - 0 mm, to reduce the region of the side surface to which the frozen batter liquid attaches thick. The rest other than the main part of the frozen batter liquid may be attached thin at a position higher than 5 mm on the side surface. To enhance the texture of the dough, it is preferable that such attachment should be less.

An embodiment in which a frozen batter liquid is not attached at all to the side surface of the gyoza dumpling itself (height t2 = 0 mm), is one of the preferable embodiments. In this case, however, as shown in Fig. 3(b), the main parts 2a, 2b of the frozen batter liquid are preferably attached sufficiently to the outer peripheral edge region of the gyoza dumpling itself in the bottom surface of the gyoza dumpling itself. This is to ensure that the main part of the frozen batter liquid comes together when the gyoza dumpling itself is held and lifted. In Fig. 3(b), illustration of the frozen batter liquid attached to the bottom surface is omitted. The part other than the main part of the frozen batter liquid may be attached to the bottom surface as a thin layer of not more than 2 mm.

As regards the range of the outer peripheral edge region of the above-mentioned (a) and the range of the outer peripheral edge region of the side surface of the gyoza dumpling itself of the above-mentioned (b) on the bottom surface of the gyoza dumpling itself, preferable ranges of the above-mentioned (a) and the above-mentioned (b) may be freely combined to set the range of the outer peripheral edge region; for example, (less than 20% of bottom surface area, and not more than 5 mm from bottom surface height), (less than 20% of bottom surface area, and not more than 3 mm from bottom surface height), (less than 10% of bottom surface area, and not more than 5 mm from bottom surface height), (less than 10% of bottom surface area, and not more than 2 mm from bottom surface height), (less than 5% of bottom surface area, and 2 mm - 0 mm from bottom surface height), (0% of bottom surface area, and not more than 2 mm from bottom surface height) and the like.

In the present invention, that the main part of the frozen batter liquid extends downwardly and sidewardly from the aforementioned outer peripheral edge region also includes extension in an oblique downward direction synthesized from the downward direction and the lateral direction. In the present invention, the main part of the frozen batter liquid only needs to expand and project from said outer peripheral edge region.

The downward direction means obliquely downward entering into the lower side of the bottom surface of the gyoza dumpling itself, vertically downward direction, or oblique downward direction having a direction component away from the gyoza dumpling itself to the outside. The sideward direction is a direction away in the lateral direction from the gyoza dumpling itself.

The main part of the frozen batter liquid may extend obliquely downwardly to enter into the lower side of the bottom surface of the gyoza dumpling itself. However, it is sometimes difficult to take out from the below-mentioned container of the present invention. The main part of the frozen batter liquid may extend in a vertically downward direction from the outer peripheral edge region. In this case, also, it is sometimes difficult to take out from the below-mentioned container, related to a draft angle. In a preferable embodiment, as exemplified in Fig. 1(a), therefore, the main part of the frozen batter liquid extends toward an oblique downward direction which has a direction component outwardly away from the gyoza dumpling itself and toward lateral direction which is actually away from the gyoza dumpling itself.

Fig. 4 shows examples of respective shapes of the outer peripheral edge region and main region bottom surface of the gyoza dumpling itself.

Fig. 4(a) shows an example of the shape of the outer peripheral edge region 2d1 including the whole outer peripheral edge. In this case, the outer peripheral edge region 2d1 spreads throughout the whole circumference of the outer peripheral edge of the bottom surface, forming a single annular region. The dashed line P1 shows a boundary line between the aforementioned outer peripheral edge region 2d1 and the main region 2c1.

Fig. 4(b) shows an example of a shape of the outer peripheral edge region including a part of the outer peripheral edge. In this case, the outer peripheral edge regions 2d2, 2d3 are divided into two by the boundary lines P2, P3 shown by two curved dashed lines, and a main region 2c2 is positioned between them.

Fig. 4(c), like Fig. 4(b), shows an example of a shape of the outer peripheral edge region containing a part of the outer peripheral edge. In this case, outer peripheral edge regions 2d4, 2d5 are divided into two by the boundary lines P4, P5 shown by linear two dashed lines, and main region 2c3 is present between them.

The shape of the outer peripheral edge region and the main region, and the shape of the boundary line exemplified in Fig. 4(a) - (c) are examples and can be appropriately determined in consideration of the state of the burning surface on the bottom surface of the gyoza dumpling itself.

The main region of the bottom surface of the gyoza dumpling itself is the rest of the outer peripheral edge region, and corresponds to the region of the supporting surface to support the gyoza dumpling itself with the bottom surface thereof in the below-mentioned container of the present invention.

As mentioned above, the area of the outer peripheral edge region is less than 20%, more preferably less than 10%, further preferably less than 5%, of the total area of the bottom surface, and may be 0% in an ideal embodiment.

Therefore, the area of the main region in the bottom surface is not less than 80%, more preferably not less than 90%, further preferably not less than 95%, of the area of the bottom surface, and may be 100% in an ideal embodiment. The area of the supporting surface of the below-mentioned container may be larger than the area of the bottom surface of the gyoza dumpling itself.

In the embodiment of Fig. 1(a), the part indicated by a symbol 2c is the main region of the bottom surface 14 of the gyoza dumpling itself 1. While the thickness t1 of the frozen batter liquid attached to the main region is not particularly limited, since the necessary amount frozen batter liquid is mostly present as the main part outside the main region, the frozen batter liquid does not need to be attached thick in the main region. From this point, the thickness of the frozen batter liquid attached in the main region may be not more than 2 mm, more preferably not more than 1 mm. The lower limit of the thickness of the frozen batter liquid attached in the main region may be 0 mm.

In actual manufacture using the below-mentioned container, it sometimes occurs that the supporting surface of the container supports the main region of the bottom surface of the gyoza dumpling itself and the frozen batter liquid enters thick in between the bottom surface and the supporting surface. In such cases, the thickness of the frozen batter liquid attached in the main region may be not more than 2 mm, more preferably not more than 1 mm, in consideration of the inherent unevenness of the bottom surface of the unfrozen gyoza dumpling itself. As for the lower limit of the thickness, a part of the bottom surface of the gyoza dumpling itself in contact with the supporting surface of the container may contain a part of 0 mm or in a state where the battery liquid is detected although it is thin enough to be unmeasurable.

The shape and size of the gyoza dumpling itself, material, thickness, size and shape (generally a circular shape) of dough, and components, constitution, amount, and cooking method of filling, which are used for manufacture of gyoza dumpling itself before freezing, are not particularly limited, manufacture method of filling and dough, wrapping manner and the like can be those known to one of ordinary skill in the art.

In one embodiment, in a frozen gyoza dumpling having a shape shown in Fig. 10(a), the distance between both ends 105, 106 of the bottom surface of the gyoza dumpling itself shown in Fig. 10(c) is about 25 mm - 110 mm, and the width of the bottom surface at the widest center part is often about 10 mm - 40 mm. The weight of one gyoza dumpling itself is about 10 g - 45 g. These numerical ranges are those of general embodiments and do not limit the present invention.

In the frozen gyoza dumpling, the component and constitution of the frozen batter liquid are not particularly limited, and a layer of a mixture of fat and/or oil, starch, and grain flour, and a layer of water may be separated.

The frozen batter liquid is preferably a mixture of 70 - 90% (wt%, hereinafter the same) of water with fat and/or oil and the like, like the frozen batter liquid attached to the frozen gyoza dumpling described in the above-mentioned patent document 2. The freeze batter liquid is attached to a gyoza dumpling itself at a proportion of 18 - 30 parts by weight per 100 parts by weight of the gyoza dumpling itself. As a result, the frozen batter liquid melts and moisture is evaporated during heating cooking of the frozen gyoza dumpling itself on a heating plate, whereby the gyoza dumpling itself can be placed in a suitable steam-baked state. When the amount of water in the frozen batter liquid relative to a gyoza dumpling itself is too small, a sufficient steam-baked state cannot be ensured during the above-mentioned heating cooking, and the texture of surrounding dough may be impaired, and the finish of baking may become uneven. In contrast, when the amount is too high, the filling is sometimes overheated, and the surrounding dough may have a weak chewiness. Therefore, the amount of the frozen batter liquid relative to a gyoza dumpling itself is determined according to the blending ratio of the frozen batter liquid, particularly the amount of water, which is preferably 18 - 30 parts by weight, more preferably 24 - 30 parts by weight, per 100 parts by weight of a gyoza dumpling itself as mentioned above.

The water content (in ice) of the batter liquid is 70 - 90 wt%, preferably 70 - 85 wt%. When the water content of the batter liquid is less than 70 wt%, burn is easily developed during cooking and a bonded part of dough of a gyoza dumpling itself tends to be hardened. When the water content of the batter liquid is more than 90 wt%, the crunchy feeling of vegetables in the filling tends to be weak.

Examples of the main component of the batter liquid other than water include fat and/or oil, starch and grain flour, and emulsifier and emulsifying adjuvant may be further included.

Since the batter liquid contains fat and/or oil, unevenness in baking does not occur easily even without using oil during cooking. When the batter liquid does not contain fat and/or oil, the bottom surface of a gyoza dumpling itself is easily burnt during cooking, or detachment of the gyoza dumpling itself from the heating plate tends to be difficult. The content of the fat and/or oil in the batter liquid is preferably 5 - 29.5 wt%, more preferably 12 - 23 wt%. The content of the starch or grain flour in the batter liquid is generally not more than 5 wt%, preferably 0.5 - 5 wt%, particularly preferably 2 - 4.5 wt%.

The batter liquid is not particularly limited as long as water is contained in a proportion of 70 - 90 wt%. When the blending weight ratio of starch or grain flour, fat and/or oil and water is set to fall within the range of 0.5-5 : 5-29.5 : 70-90, heating cooking affords a preferable baked color. The batter liquid may further contain soy sauce, salts, amino acids, gums, celluloses and the like.

While the aforementioned fat and/or oil are not particularly limited, rapeseed oil, canola oil, soybean oil, corn oil, safflower oil, palm oil, lard, shortening, butter, sesame oil, olive oil and the like can be used alone or in combination. Particularly, rapeseed oil, canola oil and soybean oil are preferable.

The batter liquid can contain starch or grain flour. It is preferable to use grain flour, since grain flour has a lower rate of damaged starch than starch, and therefore, starch particle does not swell with ease and a crispy texture of the baked surface is easily maintained even when the time passes after baking. As used herein, the damaged starch rate refers to the ratio of starch particles damaged by the loading of flour milling or crushing.

While the aforementioned starch is not particularly limited, non-glutinous rice starch, glutinous rice starch, wheat starch, cornstarch, waxy cornstarch, tapioca starch, sago palm starch, mung bean starch, potato starch, sweet potato starch and the like can be used, and particularly, non-glutinous rice starch and glutinous rice starch are preferable. While the aforementioned grain flour is not particularly limited, wheat flour, rice flour, corn flour, barley flour, buckwheat flour, potato flour, soybean flour, adzuki bean flour, barnyard millet flour, chestnut flour, millet flour and the like can be used, and particularly, rice flour is preferable since it has a low protein content and can easily confer a crispy texture after baking.

As the aforementioned emulsifier, lecithin (derived from soybean, derived from egg etc.), enzymatically decomposed lecithin, sugar ester, monoglyceride, polyglycerol ester of fatty acid, propylene glycol ester of fatty acid and the like can be used, and particularly, lecithin is preferable, and lecithin derived from soybean is more preferable. As the aforementioned emulsifying adjuvant, a protein can be used, and generally, egg white powder, isolated soy protein, powdered skim milk, wheat protein powder, whole egg powder and the like can be used. Particularly, egg white powder and powdered skim milk are preferable.

While the content of the emulsifier in a batter liquid is not particularly limited, it is generally 0.1 - 1.0 wt%, preferably 0.15 - 0.25 wt%. The content of the emulsifying adjuvant in the batter liquid is generally 0 - 1.5 wt%, preferably 0.1 - 0.5 wt%. Using an emulsifier, the batter liquid comes to have an emulsified state, which affords uniform property of the batter liquid, and suppresses unevenness in baking of gyoza dumpling itself after baking, whereby uniform, preferable texture and appearance can be conferred to a gyoza dumpling itself.

The gyoza dumpling itself may be obtained by freezing the dumpling in a state where the filling is wrapped with dough (raw gyoza dumpling), may be subjected to a necessary treatment before freezing, such as a treatment to deactivate enzymes contained in the vegetables in the filling, a preliminary heat treatment and the like, and the state of the gyoza dumpling itself before freezing is not particularly limited.

Examples of the aforementioned enzyme include peroxidase, myrosinase and the like. These are the enzymes relating to browning and development of odor. To suppress degradation of quality during cryopreservation, for example, the specific activity of peroxidase reported to have particularly high heat resistance (enzyme activity contained per 1 mg of vegetable sample protein) is preferably not more than 5.0 (U/mg or unit/mg). 1U is defined to mean an enzyme amount that reacts with hydrogen peroxide (1 µmol) under conditions of pH 8.0, 37°C for 1 min. As a treatment to deactivate peroxidase, a heat treatment at about 60°C - 100°C can be mentioned. As a stage of heating vegetables to deactivate peroxidase, for example, a stage of starting material when vegetables are raw vegetables and the like, a stage of filling, a stage of wrapping the filling with dough and the like can be mentioned.

As a measurement method of the specific activity of peroxidase contained in the vegetables in the filling of frozen gyoza dumpling, a known method may be used and, for example, the following measurement method can be mentioned.
(1) The object frozen gyoza dumpling is thawed, vegetables are taken out, 33.3 mM tris-hydrochloric acid (Tris-HCl) buffer (pH 8.0) is mixed at a weight ratio of (vegetables: the aforementioned buffer) = (1:3), disrupted, centrifuged at relative centrifugal acceleration 15000G for 5 min and the supernatant is used as an enzyme solution (relative centrifugal acceleration is ratio of centrifugal acceleration to gravitational acceleration).
(2) Then, the aforementioned enzyme solution (150 µL) (L shows litter), 66 mM guaiacol (150 µL), and 33.3 mM Tris-HCl buffer (pH 8.0) (2.0 mL) are mixed, pre-incubated at 37°C for 5 min, 3.3 mM hydrogen peroxide (150 µL) is added, increase in absorbance is measured at wavelength 470 nm for 1 min, and activity is calculated using an analytical curve.
(3) Next, using a commercially available protein measurement kit (for example, Tonein (registered trade mark)-TP manufactured by Otsuka Pharmaceutical Co., Ltd. and the like), the protein amount of vegetables is measured. Lastly, the activity (U) is divided by the protein amount (mg) to give the object specific activity (U/mg).

To sterilize the product, it is preferable to perform a preliminary heat treatment before freezing. For example, a batter liquid and a gyoza dumpling itself may be received in the container, and heated and steamed about 60°C - 100°C. The aforementioned temperature range is one example, and the heating temperature and heating time can be appropriately changed according to the size and weight of gyoza dumpling itself, weight ratio of filling, mixing ratio of meat and vegetable in the filling and the like. The preliminary heat treatment may also function as a treatment to deactivate the aforementioned enzymes such as peroxidase and the like.

The frozen gyoza dumpling of the present invention may be provided without containing in a container, but contained in an outer packaging bag and the like.

The container of the present invention is now explained.

The container is used to contain the frozen gyoza dumpling of the present invention (usable as a tray for frozen gyoza dumpling) or manufacture the frozen gyoza dumpling of the present invention therein. A frozen gyoza dumpling comprising a frozen batter liquid having a position of attachment and range of amount different from those defined for the frozen gyoza dumpling of the present invention may be contained.

In the following explanation, a preferable embodiment for the frozen gyoza dumpling of the present invention is explained.

As exemplified in Fig. 1(b), Fig. 5(a), the container 3 is for containing one or more frozen gyoza dumplings (comprising gyoza dumpling itself 1 and a batter liquid 2 attached thereto) which are frozen. The container has, in its inside, a supporting surface 31 to support a region of not less than 60% of the bottom surface of the gyoza dumpling itself 1 with a bottom surface facing downward, and recess parts 32a, 32b to receive the aforementioned frozen batter liquid. In the examples shown in the cross-sectional views of Fig. 1(b), Fig. 5(a), the recess parts 32a, 32b are divided into two; however, they may be integrated surrounding the periphery of the supporting surface. The opening part of the recess part is adjacent to some or all of the outer peripheral edge of the supporting surface 3, and an internal space of the recess part is at a height not more than the height of the supporting surface (which can also be understood to mean that a protrusion to be the supporting surface rises from the bottom surface of the recess part). In addition, the internal space of the recess part is capable of receiving not less than 35% of the total weight of the frozen batter liquid 2 attached to the gyoza dumpling itself 1 as exemplified in Fig. 1(b).

In the container, for example, other frozen gyoza dumpling having a frozen batter liquid attached thick to the upper part of the side surface of the gyoza dumpling itself may be contained. However, in view of the unique constitution having the aforementioned supporting surface and recess part, the container can be used particularly preferably for receiving the above-mentioned frozen gyoza dumpling of the present invention. The frozen gyoza dumpling of the present invention can be obtained by merely injecting a batter liquid up to a given height of the container, arranging the unfrozen gyoza dumpling itself on a supporting surface, applying preliminary heating as necessary, and freezing.

The shape of the supporting surface of the container may be smaller than the shape of the bottom surface 14 of the gyoza dumpling itself 1 as shown in Fig. 5(a), or the same as the shape of the bottom surface 14 of the gyoza dumpling itself 1 as shown in Fig. 5(b), or larger than the shape of the bottom surface 14 of the gyoza dumpling itself 1 as shown in Fig. 5(c).

The supporting surface is preferably a flat surface since it flattens the bottom surface of the gyoza dumpling itself.

The supporting surface preferably has an area of 60% - 150%, preferably 80% - 100%, of the area of the bottom surface of the gyoza dumpling itself to be set.

When the supporting surface is too small relative to the bottom surface of the gyoza dumpling itself, the gyoza dumpling itself extrudes from the supporting surface, which causes unevenness of the bottom surface, and a nonuniform burning surface. When the supporting surface is too large relative to the bottom surface of the gyoza dumpling itself, since the recess part is too far from the dumpling itself, it is difficult to be lifted together, and workability during cooking and thawing is unpreferably degraded.

To make the area of the frozen batter liquid attached to the bottom surface of the gyoza dumpling itself as small as possible, the shape of the supporting surface is preferably made to substantially match or correspond to the shape of the bottom surface of the gyoza dumpling itself or the shape of the support surface is increased by a trace amount.

When the shape of the supporting surface matches the shape of the bottom surface of the gyoza dumpling itself, since the gyoza dumpling itself is placed on the supporting surface with the bottom surface facing down, the shape of the bottom surface and the shape of the supporting surface are in a mirror image relationship. When the shape of the bottom surface forms a line symmetry, even if the shape of the supporting surface is in a mirror image relationship with the bottom surface, it is the same as the shape of the bottom surface.

The shape of the supporting surface is preferably matched with the shape of the main region of the bottom surface of the gyoza dumpling itself in the frozen gyoza dumpling of the present invention mentioned above. That is, it can be referred to as an example of the shape of the supporting surface of the main region in Fig. 4(a) - (c). As mentioned above, the shape of the main region of the bottom surface of the gyoza dumpling itself and the shape of the corresponding supporting surface are in a mirror image relationship.

The shape of the bottom surface of the gyoza dumpling itself is generally a shape having a longitudinal direction as shown in Fig. 10(c). The shape of the actual bottom surface is not a simple shape and has a comparatively large manufacturing error as a food. Therefore, it is a preferable embodiment with no waste that the shape of the supporting surface is as consistent as possible with the shape of the bottom surface of the gyoza dumpling itself. It may be generally a similar shape, and a similar shape having a longitudinal direction corresponding to the shape of the bottom surface of the gyoza dumpling itself (i.e., shape similar to the shape of the bottom surface) is preferable.

The recess part is for receiving some or all of the main part of the frozen batter liquid per one gyoza dumpling itself. The main part of the frozen batter liquid may extrude upward from the recess part so that it can attach to the gyoza dumpling itself.

The weight G3 of the frozen batter liquid that fills a recess part for one gyoza dumpling itself (part below bottom surface 14 of gyoza dumpling itself 1, in the main parts 2a, 2b of the frozen batter liquid shown in Fig. 3(a), (b)) is preferably 35% - 100%, more preferably 50% - 100%, particularly preferably 80% - 100%, of the total weight of the frozen batter liquid G1 (weight of whole frozen batter liquid shown in Fig. 1(a)) attached to the gyoza dumpling itself.

In the frozen gyoza dumpling of the present invention, as mentioned above, the weight G2 (the weight of the main parts 2a, 2b of the frozen batter liquid shown in Fig. 3(a), which is the total of the weight G3 and the weight of a part at a position higher than the bottom surface 14 of the gyoza dumpling itself 1) of the main part of the frozen batter liquid per one gyoza dumpling itself is not less than 40% of the total weight of the frozen batter liquid G1 attached to one gyoza dumpling itself.

As shown in Fig. 3(a), when the weight G3 of the frozen batter liquid in the recess part is smaller than the weight G2 of the main part of the frozen batter liquid, to attach to the gyoza dumpling itself, the frozen batter liquid in the recess part not only fills the recess part but also reaches a height above the opening of the recess part, whereby the weight G2 of the main part is secured, as shown in Fig. 1(b).

The weight G3 of the frozen batter liquid to be filled in the recess part does not exceed weight G2 of the main part of the frozen batter liquid in one gyoza dumpling itself. As shown in Fig. 3(b), when the weight G3 is the same as weight G2, the main part of the frozen batter liquid attaches only to the outer peripheral edge region of the bottom surface of the gyoza dumpling itself, as shown in said Figure.

The internal space of the recess part is preferably determined to satisfy the conditions of the frozen batter liquid attached to the frozen gyoza dumpling of the present invention explained above. That is, when the recess part is filled with a frozen batter liquid, the frozen batter liquid is further supplied as necessary to form the main part of the frozen batter liquid, and the main part is attached to the above-mentioned outer peripheral edge region of the gyoza dumpling itself, it is preferable that the outer peripheral edge region satisfies the following conditions.
(a) the bottom surface of the gyoza dumpling itself is a region of less than 20% of an area of the bottom surface, and
(b) the side surface of the gyoza dumpling itself is a region up to a height of not more than 5 mm from the bottom surface.

To satisfy the above-mentioned conditions, weight G3 of the frozen batter liquid that fills the internal space of the recess part is preferably 54% - 100% of the weight G2 of the main part of the frozen batter liquid. In addition, when the outer peripheral edge region is present in the side surface of the gyoza dumpling itself (namely, when the frozen batter liquid is at a position higher than the bottom surface), the weight G3 of the frozen batter liquid that fills the recess part is preferably about 49% - 95% relative to the weight G2 of the main part of the frozen batter liquid.

When the ratio of the weight G3 relative to weight G2 is smaller than the aforementioned range, the liquid surface of the frozen batter liquid unpreferably needs to be increased than a given height to secure weight G2 of the main part. When the ratio of the weight G3 is larger than the aforementioned range, the weight G2 of the main part unpreferably becomes larger than the necessary amount.

The opening part of the recess part of one gyoza dumpling itself may be adjacent and divided into two parts corresponding to the both end parts of the gyoza dumpling itself supported on the supporting surface in the outer peripheral edge of the supporting surface.

A recess part with an excessively shallow and wide opening makes the opening of the whole container large, makes the frozen batter liquid thin and easy to break, and makes it difficult to take out the gyoza dumpling itself and the frozen batter liquid together. On the other hand, a recess part with an excessively deep and narrow opening makes the depth (thickness) of the entire container too large, and it is difficult to take out the frozen batter liquid from such a deep recess part.

Therefore, the depth of the recess part of a gyoza dumpling itself having a general size is, for example, preferably about 2 mm - 16 mm, more preferably about 4 mm - 8 mm. The opening area of the recess part in this case varies depending on the gradient of the wall surface. It is, for example, preferably about 1.5 mm² - 8 mm², more preferably about 3 mm² - 6 mm². These values may exceed the exemplified range as appropriate, according to the size of the gyoza dumpling itself or when a larger amount of a batter liquid is applied.

In Fig. 1(b), Fig. 5(a), a cross sectional shape of the recess part is drawn as an upside down trapozoid as an example for explanation. The opening shape of the recess part and the shape of the internal space (shape of inner wall plane) are not particularly limited. While the bottom surface of the recess part may be flat, the bottom part may be curved to have a U-shaped cross-section.

The side walls in the recess part may be side walls exclusively for a recess part, and a part of the side wall of the recess part may also function as a lower part of the outer circumference walls of the container 3, as exemplified in Fig. 1(b), Fig. 5(a).

When the supporting surface is horizontal, the side walls of the recess part may be a vertical plane or a plane leaning toward the inside of the recess part (i.e., overhang plane). In such case, unless the container is flexible, the frozen batter liquid filled in the recess part may be difficult to be removed or, during manufacture of the container, sometimes difficult to be taken out from the molding die. Therefore, it is preferable to form, on the side wall in the recess part, a gradient such as to extend from the bottom surface of the recess part toward the opening of the recess part, as exemplified in Fig. 1(b), Fig. 5(a).

As a gradient to extract the frozen batter liquid from the recess part, a gradient inclining 5 degrees - 65 degrees, preferably 5 degrees - 25 degrees, from the vertical plane as the reference plane can be mentioned.

Conventional containers can be referred to as for the angle of gradient of a part that does not contact the frozen batter liquid (parts such as upper part of the side wall of the container and the like) in the side wall of the container and, for example, it may be about 3 degrees - 10 degrees.

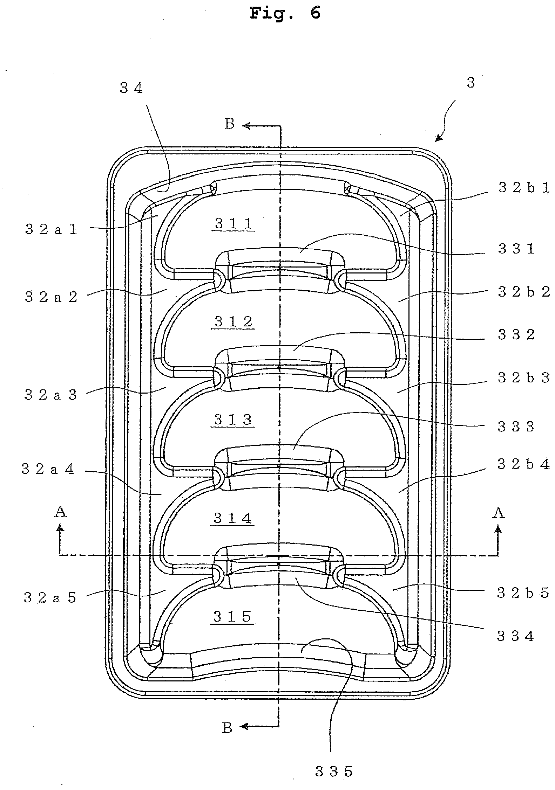

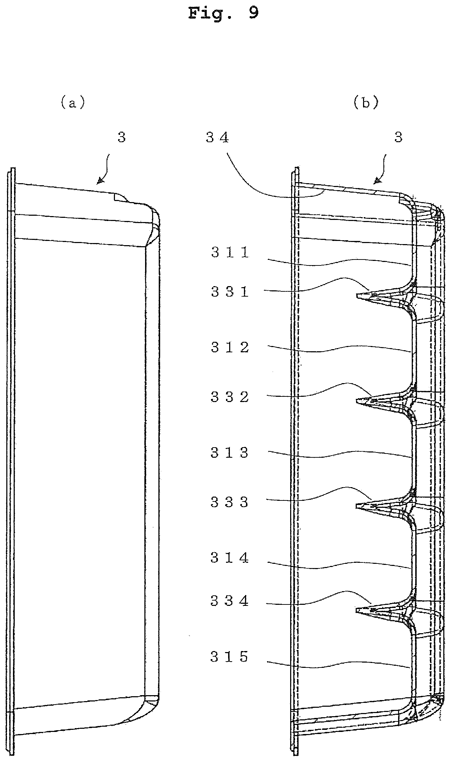

Fig. 6 - Fig. 9 show one example of the container of the present invention. The shape of each part of the container shown in these Figures is one example of the design along the technical concept of the present invention, and does not limit the shape of the container. In the examples shown in these Figures, five gyoza dumplings themselves are received in one container, the outer shape and number of the gyoza dumpling itself to be received are not limited.

The container is more concretely explained below by referring to Fig. 6 - Fig. 9.

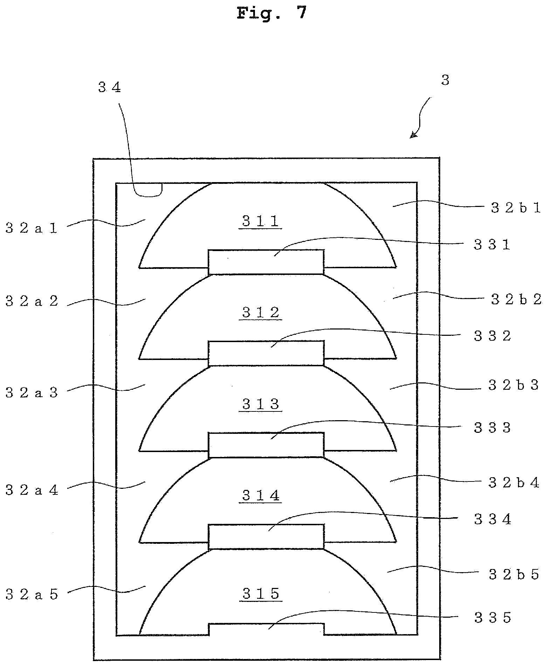

As explained by referring to Fig. 10, generally, the shape of the bottom surface of the gyoza dumpling itself to be arranged is often a half-moon shape or a crescent shape. Therefore, the shape of the supporting surface of the container is, as shown simplified in Fig. 7, a half-moon shape or a crescent shape corresponding to the shape of the aforementioned bottom surface of the gyoza dumpling itself is preferable.

To correctly arrange and retain each gyoza dumpling itself, an actual container includes partitioning protrusions 331, 332, 333, 334 as shown in Fig. 6 - Fig. 9. Thus, the shape of the supporting surface is a similar crescent shape mimicking the crescent shape of the bottom surface of the gyoza dumpling itself.

As exemplified in Fig. 6 - Fig. 9, when a plurality of gyoza dumplings themselves are received in the container, a necessary number of supporting surfaces (five shown by codes 311 - 315 in the examples of Figures) are formed in the container.

In the examples of Fig. 6 - Fig. 9, a preferable embodiment includes supporting surfaces 311 - 315 facing the same direction, and partitioning protrusions 331 - 334 interposed between respective supporting surfaces, and connected to each other in one row. In the examples of Fig. 6 - Fig. 9, five gyoza dumplings themselves are placed in one row and, for example, a pattern of three rows of four gyoza dumplings themselves per one row, a pattern of four rows of six gyoza dumplings themselves per one row and the like may be employed, and a configuration pattern according to the number to be supplied may be employed. In addition, a plurality of supporting surfaces may each face a different direction.

In the examples of Fig. 6, Fig. 7, an opening part of the recess part is adjacent to two parts (in the outer peripheral edge of the supporting surface) corresponding to the both ends of gyoza dumpling itself supported on the supporting surface. Particularly, in an embodiment in which a plurality of supporting surfaces are connected, the aforementioned recess part adjacent to one supporting surface is divided into two by a connecting part between supporting surfaces. For example, a recess part adjacent to one supporting surface 311 is divided into two recess parts 32a1, 32b1 separated from each other.

In the examples of Fig. 6 - Fig. 9, each of the divided two recess parts 32a1, 32b1 in adjacency to one supporting surface (for example, supporting surface 311), and each of the divided two recess parts 32a2, 32b2 in adjacency to the neighboring supporting surface (for example, supporting surface 312) communicate with each other in the recess parts on the same side as the supporting surfaces 311, 312 (i.e., a pair of recess part 32a1 and recess part 32a2, a pair of recess part 32b1 and recess part 32b2) to form one recess part. In this way, as exemplified in Fig. 6, Fig. 7, the recess parts 32a1 - 32a5 on the left side of the Figures communicate with each other to form one recess part. Also, the recess parts 32b1 - 32b5 on the right side of the Figures may communicate with each other to form one recess part.

In an alternative example different from the examples of Fig. 6 - Fig. 9, the recess parts 32a1 - 32a5 on the left side of the Figure, and the recess parts 32b1 - 32b5 on the right side of the Figure may not communicate with each other, divided by extended partitioning protrusions, whereby containing parts for separately placing a plurality of frozen gyoza dumplings (space for each frozen gyoza dumpling) are formed, and the aforementioned supporting surface and recess part may be respectively provided in each containing part.

Alternatively, moreover, by setting the height of the above-mentioned partitioning wall to a height not more than the height of the supporting surface, preferably lower than the height of the supporting surface, the recess parts 32a1 - 32a5 on the left side, recess parts 32b1 - 32b5 on the right side may communicate with each other beyond the low partition wall. Such embodiment is preferable since, even if all the frozen batter liquids in the container are integrally connected together, it can be easily broken into individual frozen dumplings.

In the examples of Fig. 6 - Fig. 9, partitioning protrusions 331 - 334 are formed between respective supporting surfaces 311 - 315. As shown as a size in the lateral direction (length) in Fig. 6, Fig. 7, the partitioning protrusion in this example is about 20% - 100% of the size in the lateral direction (length) of each supporting surface. Even though it is short, since it favorably extends along the central portion of the concave-curved side surface of the gyoza dumpling itself, it preferably functions for partitioning or positioning. When the partitioning protrusion is short, a sufficient space for a recess part can be created on both sides thereof.

In the examples of Fig. 6 - Fig. 9, to match the shape of the supporting surface 315 at the lowermost end with the shape of other supporting surfaces 311 - 314, a protrusion 335 is formed on outer circumference inner wall surface 34 of the container.

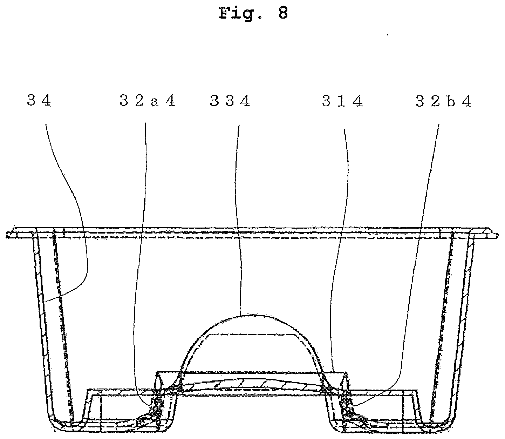

The shape of the partitioning protrusion part may be designed as appropriate. In the examples of Fig. 6 - Fig. 9, the shape of the partitioning protrusion is close to a semicircular shape as shown in Fig. 8, since the release property is improved when the containers are stacked together.

The material of the container, molding method, and thickness of each part such as wall and the like are not particularly limited, and conventionally-known containers for frozen gyoza dumplings can be referred to. Examples of the material include plastic such as vinyl chloride, polyethylene terephthalate, polystyrene, polypropylene, polycarbonate and the like, metals such as aluminum and the like, paper and the like, and examples of the molding method include injection molding, blow molding, vacuum forming, pressure forming and the like. While the thickness of each part varies depending on the rigidity of the material and function of the part, it is, for example, about 0.1 mm - 2.0 mm.

The pack of the present invention is explained below.

The pack has a constitution in which the frozen gyoza dumpling itself and a frozen batter liquid attached to the gyoza dumpling itself are set in the above-mentioned container of the present invention. In view of the constitution of the supporting surface and recess part in the container, the frozen gyoza dumpling of the present invention is most preferably adapted in the container 3 as shown in Fig. 1(b), the frozen gyoza dumpling itself 1 is placed on the supporting surface 31 with the bottom surface facing downward, and frozen batter liquid 2 attached to the gyoza dumpling itself extends into recess parts 32a, 32b to fill the inside of the recess part. In this case, the main part of the frozen batter liquid attached to the gyoza dumpling itself 1 attaches to the outer peripheral edge region of the aforementioned gyoza dumpling itself, and extends downwardly and sidewardly, and some or all of the main part extends into the recess part in the aforementioned container to fill the recess part. The [some or all of the main part of the frozen batter liquid] is weight G3 of the frozen batter liquid that fills an internal space of the above-mentioned recess part. A preferable range is 54% - 100% of the weight G2 of the main part of the frozen batter liquid. When the side surface of the gyoza dumpling itself has an outer peripheral edge region, about 49% - 95% is preferable.

The container having frozen gyoza dumplings placed inside is preferably sealed tightly in an outer packaging bag (not shown). In this case, the opening part of the container is preferably sealed hermetically with a film from the viewpoint of hygiene and to suppress quality deterioration such as freezer burn, fading, oxidation of fats and oils and the like that occur during frozen storage.

The manufacture method of the frozen gyoza dumpling of the present invention is explained below.

The manufacture method includes the following steps S1, S2:
(step S1) a step of placing an unfrozen gyoza dumpling itself (raw gyoza dumpling wrapping the filling with dough sheet) with a bottom surface facing downward, placing a batter liquid to satisfy the following condition (I) to be in contact with the aforementioned unfrozen gyoza dumpling itself
   (I) not less than 40% of the total weight of the batter liquid to be attached contacts a region including a part of the outer peripheral edge of the bottom surface of the unfrozen gyoza dumpling itself and the vicinity thereof, or a region including the whole outer peripheral edge and the vicinity thereof, and extends downwardly and sidewardly from the contacted region
(step S2) a step of freezing the aforementioned unfrozen gyoza dumpling itself and the batter liquid in the state obtained by the aforementioned step S1 to give frozen gyoza dumpling comprising the frozen gyoza dumpling itself and the frozen batter liquid attached to the gyoza dumpling itself. A treatment may be appropriately applied as necessary before freezing, for example, a heat treatment to deactivate enzymes contained in the vegetables in the filling (for example, the above-mentioned treatment to render specific activity of peroxidase not more than 5.0 (U/mg)), the above-mentioned preliminary heat treatment for sterilization and the like.

In the above-mentioned step S1, a method of integrating the batter liquid with the bottom surface of the unfrozen gyoza dumpling itself in a frozen state while satisfying the above-mentioned condition (I) may be any and, for example, a method using a die for positioning the batter liquid on the gyoza dumpling itself, a method including applying a batter liquid having increased viscosity by cooling to the gyoza dumpling itself or the like can be used.

Utilizing the container of the present invention and sequentially performing the above-mentioned steps S1, S2 in the container, the frozen gyoza dumpling of the present invention can be completed while being contained in the container and can be directly sent to a packaging step.

In a manufacture method utilizing the container, the above-mentioned step S1 is performed by the following step.

(step S11) A filling is wrapped with dough by a general procedure to form an unfrozen gyoza dumpling itself (raw gyoza dumpling).

(step S12) A recess part of a separately-formed container is filled with a batter liquid, and the batter liquid is injected into the container to a position higher than the supporting surface of the container as long as the conditions of the above-mentioned (I) are satisfied.

(step S13) the bottom surface of the unfrozen gyoza dumpling itself facing downward is placed on the supporting surface of the container.

Here, either of the aforementioned (step S12) for injecting the batter liquid into the container and the aforementioned (step S13) for placing the unfrozen gyoza dumpling itself in the container may be performed earlier. From the aspect of manufacturability, the aforementioned (step S12) is preferably performed before the aforementioned (step S13).

Where necessary, the above-mentioned preliminary heat treatment and the like may be appropriately added before freezing, as mentioned above.

Then, in the above-mentioned step S2, the unfrozen gyoza dumpling itself attached with the batter liquid in the container is rapidly frozen together with the container, in which the gyoza dumpling itself and the batter liquid attached together are frozen, whereby the frozen gyoza dumpling of the present invention is obtained.

In the manufacture method utilizing the container of the present invention, not only the recess part in the container is filled with the batter liquid, but also the liquid surface of the batter liquid is preferably higher than the supporting surface by thickness t2 shown in Fig. 3(a) such that the batter liquid will contact the gyoza dumpling itself in a sufficient area. As explained for the frozen gyoza dumpling of the present invention, t2 is preferably not more than 5 mm, more preferably not more than 3 mm, not more than 2 mm and higher than 0 mm (for example, height of not more than 2 mm and not less than 0.5 mm) is particularly preferable.

When the liquid surface of the batter liquid is higher than the supporting surface, weight G3 (not less than 35% of the total weight) frozen batter liquid filling the recess part relative to weight G2 (not less than 40% of the total weight) of the main part of the frozen batter liquid attached per one gyoza dumpling itself is preferably 49% - 95%.

As shown in Fig. 1(b), when the supporting surface is smaller than the bottom surface of the gyoza dumpling itself, and the opening of the recess part partly overlaps with the bottom surface of the gyoza dumpling itself, the unfrozen gyoza dumpling itself may contact the liquid surface of the frozen batter liquid by merely filling the recess part with the batter liquid, as shown in Fig. 3(b). Even in such case, to ensure detachment of the frozen batter liquid from the recess part by lifting the gyoza dumpling itself, it is preferable to set the liquid surface of the batter liquid higher than the supporting surface by thickness t2 shown in Fig. 3(a).

While the present invention is more specifically explained in the following by referring to Experimental Examples and the like, the scope of the present invention is not limited to the following Experimental Examples and the like.

### [Examples]

### [Example 1]

In this Example, utilizing the container of the present invention exemplified in Fig. 6, the frozen gyoza dumpling of the present invention was actually manufactured, taken out the container, cooked by heating, and the quality of the resulting baked gyoza dumpling was evaluated.

The shape of the supporting surface of the container used in this Example was almost similar to the shape of the bottom surface of the gyoza dumpling itself manufactured for the test, and could support the whole bottom surface of the gyoza dumpling itself.

As Comparative Example, similar to conventional frozen gyoza dumplings for home use, frozen gyoza dumpling in which a thick frozen batter liquid is attached to the side surface and bottom surface of the gyoza dumpling itself was manufactured, cooked by heating, and the quality of the resulting baked gyoza dumpling was evaluated in the same manner as in Example products.

### [Preparation of gyoza dumpling itself]

A filling (13.2 g) from a total mixture (32 g) of meat (mixture of ground pork and ground chicken, 260 g), vegetables (mixture of cabbage, onion, Chinese chive, garlic, 550 g), egg white (25 g), sesame oil (20 g), sake (10 g), spice and seasoning, which has a water content of about 68%, was wrapped with one sheet of commercially available gyoza dumpling dough (5.6 g) to give a raw gyoza dumpling (unfrozen gyoza dumpling itself) having a total weight of about 19 g.

### [Preparation of batter liquid]

An emulsified batter liquid containing water 84 wt%, canola oil 13 wt%, rice flour 2.5 wt%, an emulsifier (lecithin derived from soybean, 0.1 wt%), and an emulsifying adjuvant 0.4 wt% (egg white powder) was prepared.

### [Attachment of batter liquid to Example product]

In this Example product, using the container of the present invention exemplified in Fig. 6, the recess part was filled with the batter liquid, and the batter liquid was poured into the container such that the liquid surface of the batter liquid would be 2 mm higher than the supporting surface when the gyoza dumpling itself was set. Then, gyoza dumpling itself was placed with the bottom surface facing down on the supporting surface of the container, with the batter liquid attaching up to a position 2 mm higher than the bottom surface of the gyoza dumpling itself (increase in the liquid surface by setting the gyoza dumpling itself is ignorable), preliminary heating was performed, and rapidly frozen to give the frozen gyoza dumpling of the present invention (Example product).

The weight of the frozen batter liquid attached to one gyoza dumpling itself was 6 g. That is, the frozen batter liquid attached to 100 parts by weight of gyoza dumpling is about 32 parts by weight.

The main part of the frozen batter liquid was 70% of the total weight of the frozen batter liquid.

### [attachment of batter liquid to Comparative Example product]

In the Comparative Example product, a concave die resembling the conventional container shown in Fig. 11(a) was used, the batter liquid was attached to the bottom surface and the side surface of the gyoza dumpling itself in an about 5 mm-thick coating layer, and frozen to give frozen gyoza dumpling as a Comparative Example product. The frozen batter liquid was attached to the side surface of the gyoza dumpling itself to a height of about 5 mm from the bottom surface.

The weight of the frozen batter liquid attached to one gyoza dumpling itself was 6 g (i.e., the frozen batter liquid attached to 100 parts by weight of gyoza dumpling is about 32 parts by weight).

Each frozen gyoza dumpling of Example product and Comparative Example product was heat-cooked using a household gas stove and a frying pan having a diameter of 26 cm, in which 12 frozen gyoza dumplings were placed side by side per one testing and a medium heat was used. The steam-baking time with the lid put on the frying pan was set to about 8 min, and after the completion of steam-baking time, the lid was removed and baking was continued for about 3 min to manufacture a burn mark (baked color) on the bottom surface.

A sensory evaluation of the gyoza dumpling itself (baked gyoza dumpling) after cooking was performed by six panelists sufficiently trained as regards the properties of the gyoza dumpling.

The evaluation items were the following three items (a) - (c) :
(a) texture (chewiness) of dough, (b) texture of dough (drying of marginal part), (c) unevenness of baked color in bottom surface.

The "chewiness" as the texture of dough is one of the dente textures upon biting the dough with teeth, and is a texture not too hard and not too soft and affording elasticity within a given range. The "highly chewy" is a texture not too hard and not too soft with the highest elasticity within the given range of elasticity.

The evaluation criteria and the values (evaluation scores) expressing same for the evaluation items (a) - (c) are as shown in the following Table 1. The overall evaluation score in the Table is an average evaluation score of each evaluation item (a) - (c) after rounding off.

### Table 1

(a) texture (chewiness) of dough

| evaluation score | evaluation criteria |
|---|---|
| 5 | highly chewy |
| 4 | very chewy |
| 3 | chewy |
| 2 | less chewy |
| 1 | scarcely chewy |

(b) texture (drying of marginal part) of dough

| evaluation score | evaluation criteria |
|---|---|
| 5 | no drying, highly soft |
| 4 | no drying, very soft |
| 3 | almost no drying, soft |
| 2 | rather dried, rather hard |
| 1 | dried, hard |

(c) uneven baked color of bottom surface

| evaluation score | evaluation criteria |
|---|---|
| 5 | highly thin |
| 4 | very thin |
| 3 | thin |
| 2 | rather thick |
| 1 | highly thick |

### [Evaluation results]

The evaluation scores (average evaluation scores (rounded off) of 6 judges) of the Example products and Comparative Example products for the above-mentioned evaluation items (a) - (c) are as shown in the following Table 2.

**Table 2**

| | lapse of time | (a) texture (chewiness) of dough | (b) texture of dough (drying of marginal part) | (c) uneven baked color of bottom surface | overall evaluation score |
|---|---|---|---|---|---|
| Example product | immediately after cooking | 5 | 4 | 5 | 5 |
| | 10 min later | 5 | 3 | - | 4 |
| Comparative Example product | immediately after cooking | 3 | 3 | 3 | 3 |
| | 10 min later | 2 | 2 | - | 2 |

### [Summary of evaluation results]

The Example product showed good evaluation results for all the above-mentioned evaluation items (a) - (c) as compared to Comparative Example product, since the amount of the frozen batter liquid attached to the baking surface and side surface of the gyoza dumpling is small.

In particular, extremely good results were obtained in the texture of dough on the side surface, and uniformity of the baked color of the bottom surface of the Example product.

### [Example 2]

In this Example, frozen gyoza dumpling was manufactured by fixing the total weight of the batter liquid used per one gyoza dumpling itself to 6 g, changing the height of the frozen batter liquid attached to the side surface of the gyoza dumpling itself by varying the depth of the recess part, and changing the weight ratio of the frozen batter liquid present not above the bottom surface of the gyoza dumpling itself, and evaluated against the sample immediately after cooking.

In the following, the ratio of the weight of the frozen batter liquid present not above the bottom surface of the gyoza dumpling itself (=the frozen batter liquid in the recess part) to the total weight of the frozen batter liquid (6 g) is called "ratio of the weight not above bottom surface level". Here, the amount of the frozen batter liquid that entered between the bottom surface of the gyoza dumpling itself and the supporting surface of the container is disregarded.

The ratio of the weight not above bottom surface level means, for example, when 60% of the frozen batter liquid is present not above the bottom surface of the gyoza dumpling itself, 40% of the frozen batter liquid attaches thick to the side surface above the bottom surface of the gyoza dumpling itself, and when the ratio of the attached batter liquid present not above the bottom surface of the gyoza dumpling itself is small, the frozen batter liquid attaches to a higher position of the side surface above the bottom surface of the gyoza dumpling itself.

The conditions other than the ratio of the weight not above bottom surface level are the same as in the above-mentioned Example 1.

### [Evaluation results]

The evaluation scores (average evaluation scores (rounded off) of 6 judges) of the Example products for the above-mentioned evaluation items (a) - (c) are as shown in the following Table 3. In the following Table 3, the ratio of the weight not above bottom surface level being 95% means that the liquid surface of the batter liquid was raised by about 2 mm above the bottom surface to make the frozen batter liquid attached to the gyoza dumpling itself.

**Table 3**

| ratio of weight not above bottom surface level | (a) texture (chewiness) of dough | (b) texture of dough (drying of marginal part) | (c) uneven baked color of bottom surface | overall evaluation score |
|---|---|---|---|---|
| 95 % | 5 | 4 | 5 | 5 |
| 75 % | 5 | 4 | 5 | 5 |
| 55 % | 5 | 4 | 4 | 4 |
| 35 % | 4 | 3 | 3 | 3 |
| 15 % | 2 | 2 | 2 | 2 |

### [Summary of evaluation results]

Under the conditions of the ratio of the weight not above bottom surface level being not less than 35%, a good evaluation value of 3 was obtained in the above-mentioned overall evaluation scores. At not less than 55%, the texture of the dough became more superior, and the baked color of the bottom surface was preferably uniform at not less than 75%.

### [Example 3]

In this Example, the ratio of contact area S2 between the bottom surface and the supporting surface of the container, to area S1 of the bottom surface of the gyoza dumpling itself ((S2/S1)×100) was changed by changing the area of the supporting surface of the container of the present invention, and the frozen gyoza dumpling was manufactured and evaluated.

In the following, the aforementioned ratio ((S2/S1)×100) is referred to as the "contact area ratio". While area S1 of the bottom surface of the gyoza dumpling itself is somewhat inconsistent among samples due to a manufacture error, the contact area ratio was calculated by setting S1=19 cm² in all samples.

The conditions other than the contact area ratio are the same as those in the above-mentioned Example 1.

### [Evaluation results]

The evaluation scores (average evaluation scores (rounded off) of 6 judges) of the Example products for the above-mentioned evaluation items (a) - (c) are as shown in the following Table 4.

**[Table 4]**

| contact area ratio | (a) texture (chewiness) of dough | (b) texture of dough (drying of marginal part) | (c) uneven baked color of bottom surface | overall evaluation score |
|---|---|---|---|---|
| 100% | 5 | 5 | 5 | 5 |
| 80% | 5 | 5 | 4 | 5 |
| 60% | 4 | 4 | 4 | 4 |
| 40% | 2 | 3 | 2 | 3 |
| 20% | 2 | 2 | 1 | 2 |

### [Evaluation results]

In the bottom surface of the gyoza dumpling itself, a part not in contact with the supporting surface of the container (i.e., bottom surface extruding from the supporting surface) is softened by a preliminary steam heating, and develops deformation, which in turn causes inconsistent baked color of the bottom surface after cooking. When the supporting surface supports 60% of the bottom surface of the gyoza dumpling itself, inconsistent baked color becomes a preferable state, and it was found that a uniform baked color can be obtained by supporting the entire bottom surface by the supporting surface.

### [Industrial Applicability]

The present invention has enabled reduction of unevenness of the frozen bottom surface of gyoza dumpling due to an influence of the container, and reduction of inconsistent burn mark on the bottom surface of the gyoza dumpling itself after baking. In addition, the present invention has made it possible to provide a more preferable frozen gyoza dumpling by reducing the part where the frozen batter liquid attaches thick to the surface of the frozen gyoza dumpling, while maintaining the superior features of conventional frozen gyoza dumplings.

The container of the present invention can preferably provide the frozen gyoza dumpling and the pack of the present invention, and the manufacture method of the present invention can be preferably practiced.

This application is based on a patent application No. 2015-119063 filed in Japan (filing date: June 12, 2015), the contents of which are incorporated in full herein.

### [Explanation of Symbols]

- 1: frozen gyoza dumpling itself
- 14: bottom surface of frozen gyoza dumpling itself
- 2: frozen batter liquid
- 2a, 2b: main part of frozen batter liquid
- 3: container

## Claims

1. A frozen gyoza dumpling comprising a frozen gyoza dumpling itself and a frozen batter liquid attached to the gyoza dumpling itself, wherein
with a bottom surface of the gyoza dumpling itself facing downward, not less than 40% of the total weight of the attached frozen batter liquid attaches to a region including a part of the outer peripheral edge of the bottom surface of the gyoza dumpling itself and the vicinity thereof, or a region including the whole outer peripheral edge of the bottom surface of said gyoza dumpling itself and the vicinity thereof, and extends downwardly and sidewardly from the attached region.

2. The frozen gyoza dumpling according to claim 1, wherein the region including a part of the outer peripheral edge of the bottom surface and the vicinity thereof, or the region including the whole outer peripheral edge of the bottom surface and the vicinity thereof is a region of less than 20% of an area of the bottom surface as regards the bottom surface of the gyoza dumpling itself and a region at a height of not more than 5 mm from the bottom as regards the side surface of the gyoza dumpling itself.

3. The frozen gyoza dumpling according to claim 1 or 2, wherein said not less than 40% of the frozen batter liquid is located separately on both end sides of the gyoza dumpling itself.

4. The frozen gyoza dumpling according to any one of claims 1 to 3, wherein a main region occupies not less than 60% of the area of the bottom surface of the gyoza dumpling itself, and the attached frozen batter liquid has a thickness of not more than 2 mm in the main region.

5. The frozen gyoza dumpling according to any one of claims 1 to 4, wherein the frozen batter liquid comprises 70 - 90 wt% of water, and an amount of the frozen batter liquid attached to one gyoza dumpling itself is 18 - 60 parts by weight per 100 parts by weight of the gyoza dumpling itself.

6. A container for containing one or more frozen gyoza dumplings, each comprising gyoza dumpling itself and a batter liquid attached thereto which are frozen,
the container having, in its inside,
a supporting surface to support a region of not less than 60% of the bottom surface of the gyoza dumpling itself with a bottom surface facing downward and a recess part to receive the frozen batter liquid, wherein
the recess part has an opening part adjacent to a part of or the whole outer peripheral edge of the supporting surface,
an internal space of the recess part is at a height not more than a height of the supporting surface, and the internal space is capable of receiving not less than 35% of the total weight of the frozen batter liquid attached to the gyoza dumpling itself in the frozen gyoza dumpling.

7. The container according to claim 6, wherein the supporting surface is a flat surface having an area of 60% - 150% of the area of the bottom surface of the gyoza dumpling itself to be set.

8. The container according to claim 6 or 7, wherein the bottom surface of the gyoza dumpling itself to be set has a shape having a longitudinal direction, and the supporting surface has a shape having a longitudinal direction corresponding to the shape of the bottom surface of the gyoza dumpling itself.

9. The container according to any one of claims 6 to 8, wherein the opening part of the recess part is adjacent to two parts in the outer peripheral edge of the supporting surface, and correspond to both ends of the gyoza dumpling itself supported on the supporting surface.

10. The container according to any one of claims 6 to 9, having a plurality of supporting surfaces for respectively setting a plurality of gyoza dumplings themselves, wherein the supporting surfaces are connected to each other with partitioning protrusions interposed between respective supporting surfaces and arrayed in one or more rows, and
said recess part adjacent to one supporting surface is divided into two by the connecting part between respective supporting surfaces.

11. The container according to claim 10, wherein the recess part divided into two and adjacent to one supporting surface, and the recess part divided into two and adjacent to a neighboring supporting surface communicate with each other to form one recess part.

12. The container according to any one of claims 6 to 9, wherein
a plurality of receiving parts for respectively setting a plurality of frozen gyoza dumplings are formed by dividing with partitioning protrusions, and the supporting surface and the recess part are formed inside each receiving part.

13. A pack of frozen gyoza dumpling, having a configuration in which frozen gyoza dumpling comprising gyoza dumpling itself and a batter liquid attached to the gyoza dumpling itself, which are frozen, are set in the container according to any one of claims 6 to 12, wherein
the gyoza dumpling itself, which is frozen, is placed with a bottom surface facing downward on a supporting surface in the container, and the frozen batter liquid attached to the gyoza dumpling itself extends in a recess part to fill the recess part.

14. The pack according to claim 13, wherein
not less than 40% of the total weight of the frozen batter liquid attached to the gyoza dumpling itself attaches to a region including a part of the outer peripheral edge of the bottom surface of the gyoza dumpling itself and the vicinity thereof, or a region including the whole outer peripheral edge and the vicinity thereof, and extends downwardly and sidewardly from the attached region, and some or all of the not less than 40% of the total weight of the frozen batter liquid fills the recess part of the container.

15. A manufacture method of a frozen gyoza dumpling comprising a frozen gyoza dumpling itself and a frozen batter liquid attached thereto, the method comprising
using the container according to any one of claims 6 to 12,
a step of filling a recess in the container with a batter liquid by injection, and further injecting the batter liquid into the container to a level higher than a supporting surface in the container as long as the conditions of following (I) is satisfied,
a step of setting an unfrozen gyoza dumpling itself with a bottom surface facing downward on the supporting surface in said container, and
a step of freezing the batter liquid injected into the container and the unfrozen gyoza dumpling itself set on the supporting surface, which are in contact with each other:
(I) not less than 40% of the total weight of the batter liquid to be attached contacts a region including a part of the outer peripheral edge of the bottom surface of the unfrozen gyoza dumpling itself and the vicinity thereof, or a region including the whole outer peripheral edge and the vicinity thereof, and extends downwardly and sidewardly from the contacted region.
